# EUROPÄISCHE PATENTSCHRIFT

(11) **EP 0 495 378 B1**
(45) Veröffentlichungstag und Bekanntmachung des Hinweises auf die Patenterteilung: **25.05.1994**
(21) Anmeldenummer: 92100188.9
(22) Anmeldetag: 08.01.1992
(51) Int. Cl.: B29C 67/22, A63C 5/12

(54) **Verfahren zum Herstellen von Sandwichlaminaten, insbesondere Ski, und Sandwichlaminat, insbesondere Ski**
Method for manufacturing sandwich laminates, in particular skis, and sandwich laminate, in particular ski
Procédé de fabrication de laminés sandwichs, notamment skis, et laminé sandwich, notamment ski

(30) Priorität: 18.01.1991 DE 4101373
(43) Veröffentlichungstag der Anmeldung: 22.07.1992
(73) Patentinhaber: BAYER AG, 51368 Leverkusen (DE)
(72) Erfinder: Eiben, Robert, Dr., Pittsburgh 15205 (US); Christoph, Geert, Dr., W-4047 Dormagen 1 (DE); von Seggern, Elke, Dr., W-5090 Leverkusen 3 (DE)

(56) Entgegenhaltungen:
- EP-A- 0 428 885
- DE-A- 1 806 433
- DE-A- 1 901 828
- DE-A- 2 941 949
- US-A- 3 840 926
- US-A- 4 099 280

## Beschreibung

Die Erfindung betrifft ein Verfahren zum Herstellen von Sandwichlaminaten, insbesondere Ski, durch Aufbringen eines Naßlaminates auf die Wandung eines Formhohlraumes und Einbringen eines fließfähigen, Hartschaumstoff bildenden Reaktionsgemisches in den geschlossenen Formhohlraum sowie ein Sandwichelement, insbesondere Ski.

Es ist bekannt, Sandwichlaminate, insbesondere Ski, derartig herzustellen, daß man in einen Formhohlraum ein trockenes Laminat und sonstige Einlegeteile einbringt und nach dem Schließen ein Hartschaumstoff bildendes Reaktionsgemisch, vornehmlich auf Basis Polyurethan, oder ein Polystyrolgranulat einbringt und zu einem Hartschaumstoffkern aufschäumt. Die Haftung zwischen Laminat und Hartschaumstoffkern ist nicht besonders gut, so daß dieses Verfahren für die Herstellung hochbeanspruchter Sandwichlaminate nicht einsetzbar ist.

Gemäß einem weiteren bekannten Verfahren wird um einen vorgefertigten Hartschaumstoffkern ein Naßlaminat aufgebaut und anschließend das Ganze verpreßt. Diese, mit viel Handarbeit verbundene Arbeitsweise ist sehr aufwendig, und die Haftung des Laminates am Schaumstoffkern ist von handwerklichen Fähigkeiten abhängig.

Bei der eingangs genannten bekannten Verfahrensweise besteht die Gefahr, daß sich das Reaktionsgemisch mit dem Naßlaminat vermischt bzw. das Naßlaminat durchdrungen wird. Dadurch wird die gewünschte Laminatschicht geschwächt, wenn auch eine sehr gute Haftung zwischen Schaumstoffkern und Laminat vorhanden ist.

Es besteht die Aufgabe, ein Verfahren zu finden, bei welchem beim Verpressen das Laminat als gesonderte Schicht erhalten bleibt, gegebenenfalls vorhandene Einlegeteile gut umfließt, und trotzdem im Fertigteil eine gute Haftung zwischen Schaumstoffkern und Laminat entsteht, welche auch höherer Beanspruchung gerecht wird.

Überraschenderweise wird diese Aufgabe dadurch gelöst, daß vor dem Einbringen des Reaktionsgemisches ein Feinstglasfaserpapier aus verpreßten Feinstglasfasern auf das Naßlaminat aufgelegt wird.

Dadurch wird erreicht, daß beim Aufschäumen des Reaktionsgemisches durch das Feinstglasfaserpapier zwar das Naßlaminat und das Reaktionsgemisch bzw. der entstehende Schaumstoff getrennt bleiben, daß aber das Naßlaminat durch diesen Druck verpreßt wird und gegebenenfalls vorhandene Einlegeteile, wie Stahlkanten, Distanzhalter und dergleichen, infolge des auftretenden Druckes vom Harz des Naßlaminates umflossen werden. Durch Beheizung des Formwerkzeuges wird dieser Vorgang noch begünstigt.

Das Feinstglasfaserpapier erfährt durch den entstehenden Druck auf der einen Seite eine gute Benetzung mit dem Naßlaminat und auf der anderen Seite eine gute Benetzung durch das Reaktionsgemisch, so daß sich beim Aushärten eine sehr gute Haftung ergibt, welche auch höheren Beanspruchungen, wie sie beispielsweise bei Abfahrtsski oder Slalomski auftreten, gerecht wird. Dieses Feinstglasfaserpapier hat nichts gemein mit Verstärkungseinlagen aus Glasfasermatten, -geweben, -vliesen oder dergleichen, wie sie in die Matrix des Laminates eingebettet werden können. Solche Feinstglasfaserpapiere sind durch Verpressen ohne Binder herstellbar.

Vorzugsweise wird ein Feinstglasfaserpapier mit einem Flächengewicht von 50 bis 100 g/m² bei einer Dicke von 0,2 bis 0,8 mm und einer Faserdicke von 0,2 bis 3,0 µm bezogen auf den Urzustand verwendet.

Als besonders bevorzugt findet ein Feinstglasfaserpapier Verwendung, welches ein Flächengewicht von 60 bis 85 g/m² bei einer Dicke von 0,4 bis 0,6 mm und einer Faserdicke von 0,5 bis 2,0 µm im Urzustand besitzt.

Solche Feinstglasfaserpapiere haben die Eigenschaft, daß sie weder vom Naßlaminat noch vom Reaktionsgemisch durchdrungen werden können, aber andererseits beiden eine genügende Eindringtiefe zuläßt, damit sie gut haften. Sie übertragen den beim Aufschäumen des Reaktionsgemisches auftretenden Druck sehr gut auf das Naßlaminat, so daß das Harz vorhandene Einlegeteile umfließt.

Das neue Sandwichlaminat, insbesondere Ski, geht aus von einem in-situ geschäumten Schaumstoffkern mit aus einem Naßlaminat gebildeten Deckschichten auf beiden Seiten. Im Laminat bzw. den daraus gebildeten Deckschichten können Einlegeteile, wie Stahlkanten usw., enthalten sein und das Laminat kann auf der Sichtseite zusätzlich eine Dekorschicht aufweisen.

Das Neue ist darin zu sehen, daß zwischen den Deckschichten und dem Hartschaumstoffkern ein sowohl an den Deckschichten als auch am Hartschaumstoffkern fest haftendes Feinstglasfaserpapier angeordnet ist.

Im Urzustand besitzt dieses Feinstglasfaserpapier vorzugsweise ein Flächengewicht von 50 bis 100 g/m² bei einer Dicke von 0,2 bis 0,8 mm und einer Faserdicke von 0,2 bis 3,0 µm.

Gemäß einer besonders bevorzugten Ausführungsform weist das verwendete Feinstglasfaserpapier im Urzustand ein Flächengewicht von 60 bis 85 g/m² bei einer Dicke von 0,4 bis 0,6 mm und einer Faserdicke von 0,5 bis 2,0 µm auf.

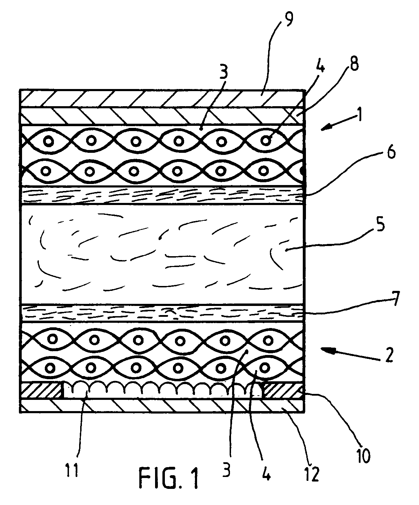

In der Zeichnung ist der Aufbau des Sandwichlaminats im Querschnitt am Ausführungsbeispiel eines Ski rein schematisch dargestellt und nachstehend näher erläutert:

Zwischen zwei Deckschichten 1, 2 eines Laminates aus einer Polyesterharzmatrix 3 oder einem Polyurethan-Naßlaminat mit eingebetteten Glasfasermatten 4 ist ein Kern 5 aus Polyurethan-Hartschaumstoff angeordnet. Zwischen dem Kern 5 und den Laminatdeckschichten 1, 2 ist jeweils ein Feinstglasfaserpapier 6, 7 von 70 g/m² Flächengewicht bei einer Dicke von 0,5 mm und einer Faserdicke von 1,25 µm angeordnet. Es ist mit den Schichten 1, 2 und dem Kern 5 fest verhaftet. Auf der Deckschicht 1 sind zusätzlich ein Stahleinleger 8 zum Befestigen der Bindung sowie eine Dekorfolie 9 angeordnet. In die Deckschicht 2 sind Stahlkanten 10 sowie zusätzlich eine Verstärkung 11 aus Carbonfasern eingebettet. Die Deckschicht 2 ist ebenfalls mit einer Dekorfolie 12, jedoch aus Polycarbonat, belegt.

Der besseren Deutlichkeit halber sind die Dicken der verschiedenen Schichten bzw. des Kerns nicht im richtigen Verhältnis dargestellt und Einlegeteile weggelassen worden.

## Patentansprüche

1. Verfahren zum Herstellen von Sandwichlaminaten, insbesondere Ski, durch Aufbringen eines Naßlaminates auf die Wandung eines Formhohlraumes und Einbringen eines fließfähigen, Hartschaumstoff bildenden Reaktionsgemisches in den geschlossenen Formhohlraum, dadurch gekennzeichnet, daß vor dem Einbringen des Reaktionsgemisches ein Feinstglasfaserpapier (6, 7) aus verpreßten Feinstglasfasern auf das Naßlaminat (1, 2) aufgelegt wird.

2. Verfahren nach Anspruch 1, dadurch gekennzeichnet, daß ein Feinstglasfaserpapier (6, 7) mit einem Flächengewicht von 50 bis 100 g/m² bei einer Dicke von 0,2 bis 0,8 mm und einer Faserdicke von 0,2 bis 3,0 µm bezogen auf den Urzustand verwendet wird.

3. Verfahren nach Anspruch 2, dadurch gekennzeichnet, daß ein Feinstglasfaserpapier (6, 7) mit einem Flächengewicht von 60 bis 85 g/m² bei einer Dicke von 0,4 bis 0,6 mm und einer Faserdicke von 0,5 bis 2,0 µm bezogen auf den Urzustand verwendet wird.

4. Sandwichlaminat, insbesondere Ski, bestehend aus einem in-situ geschäumten Hartschaumstoffkern (5) mit Deckschichten (1, 2) auf beiden Seiten aus einem Laminat, dadurch gekennzeichnet, daß zwischen den Deckschichten (1, 2) und dem Hartschaumstoffkern (5) ein sowohl an den Deckschichten (1, 2) als auch am Hartschaumstoffkern (5) fest haftendes Feinstglasfaserpapier (6, 7) angeordnet ist.

5. Sandwichlaminat nach Anspruch 4, dadurch gekennzeichnet, daß das Feinstglasfaserpapier (6, 7) im Urzustand ein Flächengewicht von 50 bis 100 g/m² bei einer Dicke von 0,2 bis 0,8 mm und einer Faserdicke von 0,2 bis 3,0 µm aufweist.

6. Sandwichlaminat nach Anspruch 5, dadurch gekennzeichnet, daß das Feinstglasfaserpapier (6, 7) im Urzustand ein Flachengewicht von 60 bis 85 g/m² bei einer Dicke von 0,4 bis 0,6 mm und einer Faserdicke von 0,5 bis 2,0 µm aufweist.

## Claims

1. A method for manufacturing sandwich laminates, in particular skis, by deposition of a wet laminate on the wall of a die cavity and introduction into the closed die cavity of a free-flowing reaction mixture which forms a rigid foamed plastic, characterised in that very fine glass fibre paper (6,7), made from very fine pressed glass fibres, is laid on the wet laminate (1,2) prior to the introduction of the reaction mixture.

2. A method according to claim 1, characterised in that a very fine glass fibre paper (6,7) is used with a weight of from 50 to 100 g/m² at a thickness of from 0.2 to 0.8 mm and a fibre thickness of from 0.2 to 3.0 µm by reference to the original state.

3. A method according to claim 2, characterised in that a very fine glass fibre paper (6,7) is used with a weight of from 60 to 85 g/m² at a thickness of from 0.4 to 0.6 mm and a fibre thickness of from 0.5 to 2.0 µm by reference to the original state.

4. A sandwich laminate, in particular ski, consisting of a rigid foamed plastic core foamed in-situ (5) having an outer layer of laminate (1,2) on both sides, characterised in that a very fine glass fibre paper (6,7), which adheres firmly both to the outer layers (1,2) and to the rigid foamed plastic core (5), is arranged between the outer layers (1,2) and the rigid foamed plastic core (5).

5. A sandwich laminate according to claim 4, characterised in that the very fine glass fibre paper (6,7) in its original state has a weight of from 50 to 100 g/m² at a thickness of from 0.2 to 0.8 mm and a fibre thickness of from 0.2 to 3.0 µm.

6. A sandwich laminate according to claim 5, characterised in that the very fine glass fibre paper (6,7) in its original state has a weight of from 60 to 85 g/m² at a thickness of from 0.4 to 0.6 mm and a fibre thickness of from 0.5 to 2.0 µm.

## Revendications

1. Procédé de fabrication de stratifiés sandwichs, skis notamment, par application d'un stratifié humide sur la paroi d'une cavité de moulage et introduction d'un mélange réactionnel fluide, formant une mousse dure, dans la cavité de moulage fermée, caractérisé en ce que, avant d'introduire le mélange réactionnel, on dépose un papier à fibres de verre très fines (6, 7) en fibres de verre très fines comprimées sur le stratifié humide (1, 2).

2. Procédé selon la revendication 1, caractérisé en ce qu'on utilise un papier à fibres de verre très fines (6, 7) ayant un grammage de 50 à 100 g/m² pour une épaisseur de 0,2 à 0,8 mm et une épaisseur de fibres de 0,2 à 3,0 µm, par rapport à l'état d'origine.

3. Procédé selon la revendication 2, caractérisé en ce qu'on utilise un papier à fibres de verre très fines (6, 7) ayant un grammage de 60 à 85 g/m², pour une épaisseur de 0,4 à 0,6 mm et une épaisseur de fibres de 0,5 à 2,0 µm, par rapport à l'état d'origine.

4. Stratifié sandwich, ski notamment, composé d'un noyau de mousse dure (5) émulsifié in situ comportant des couches de couverture (1, 2) en stratifié sur ses deux faces, caractérisé en ce qu'est disposé, entre les couches de couverture (1, 2) et le noyau en mousse dure (5), un papier à fibres de verre très fines (6, 7) adhérant solidement aux couches de couverture (1, 2) ainsi qu'au noyau de mousse dure (5).

5. Stratifié sandwich selon la revendication 4, caractérisé en ce que le papier à fibres de verre très fines (6, 7) présente à l'état d'origine un grammage de 50 à 100 g/m² pour une épaisseur de 0,2 à 0,8 mm et une épaisseur de fibres de 0,2 à 3,0 µm.

6. Stratifié sandwich selon la revendication 5, caractérisé en ce que le papier à fibres de verre très fines (6, 7) présente à l'état d'origine un grammage de 60 à 85 g/m² pour une épaisseur de 0,4 à 0,6 mm et une épaisseur de fibres de 0,5 à 2,0 µm.
